# EUROPÄISCHE PATENTSCHRIFT

(11) **EP 1 108 618 B1**
(45) Veröffentlichungstag und Bekanntmachung des Hinweises auf die Patenterteilung: **18.03.2009**
(21) Anmeldenummer: 00126564.4
(22) Anmeldetag: 12.12.2000
(51) Int. Cl.: B60R 13/08, B62D 21/11

(54) **Schallreduzierende bodenseitige Abdeckung für den Motorraum eines Fahrzeugs**
Noise reduction floor covering for a vehicle engine compartment
Couvercle de fond d'atténuation de bruit pour le compartiment moteur d'un véhicule automobile

(30) Priorität: 17.12.1999 DE 19961169
(43) Veröffentlichungstag der Anmeldung: 20.06.2001
(73) Patentinhaber: Volkswagen Aktiengesellschaft, 38436 Wolfsburg (DE)
(72) Erfinder: Wandelt, Klaus, 38554 Weyhausen (DE)

(56) Entgegenhaltungen:
- EP-A- 0 684 159
- EP-A- 0 891 917
- EP-A- 0 941 912
- DE-A- 3 604 289
- DE-A- 4 024 035

## Beschreibung

Die Erfindung betrifft eine Abdeckung gemäß dem Oberbegriff des Patentanspruchs. Abdeckungen dieser Art haben die Aufgabe, die Schallabstrahlung aus dem Motorraum eines Fahrzeugs, insbesondere eines Kraftfahrzeugs, in Richtung nach unten, also in Richtung auf eine Fahrbahn, zu verhindern, an der der Schall in Richtung auf die Umgebung reflektiert wird.

Derartige bodenseitige Abdeckungen zur Schallreduzierung sind in unterschiedlichen Ausbildungen im Einsatz und aus der Patentliteratur bekannt. Grundsätzlich kann man hinsichtlich der Befestigung derartiger Abdeckungen drei Prinzipien unterscheiden:

Wie beispielsweise die DE 39 28 507 C1 und die EP 0 047 023 P1 belegen, ist es bekannt, derartige Abdeckungen - dann in der Regel ergänzt zu einer schallabdeckenden Verkleidung für das Antriebsaggregat - am Antriebsaggregat zu befestigen. Dies erfordert verständlicherweise eine individuelle Anpassung der Abdeckung bzw. der schallabsorbierenden Verkleidung an Form und Größe des jeweiligen Antriebsaggregats. Diese Notwendigkeit widerspricht der vorteilhaften modernen Plattformstrategie, die gerade darauf abzielt, zwecks Verringerung der Teilevielfalt für eine Vielzahl von Fahrzeugformen und Größen und demgemäß auch für eine Vielzahl unterschiedlicher Antriebsaggregate im Kern gleiche Teile zu verwenden.

Ein anderes Prinzip für die Befestigung schallreduzierender Abdeckungen zeigen beispielsweise die DE 39 11 349 A1 und die DE 197 44 601 A1: Die Befestigung der jeweiligen Abdeckung erfolgt fahrzeugseitig an Teilen bzw. Bereichen, die letztlich das äußere Erscheinungsbild des Fahrzeugs, also seine Form, mitbestimmen. So geht in der Konstruktion nach der erstgenannten Schrift das Bodenteil von der Stoßstange aus, bildet also gleichsam einen Bestandteil der Karosserie, und auch in der zweitgenannten Schrift erfolgt die Befestigung des dort als Wandung bezeichneten Bodenteils an Aufbaubereichen, die das äußere Erscheinungsbild des Fahrzeugs mitbestimmen. Hier besteht zwar möglicherweise kein Zusammenhang zwischen dem jeweiligen Antriebsaggregat einerseits und der bodenseitigen Abdeckung andererseits, jedoch ist die Abdeckung abhängig von der äußeren Form des Fahrzeugs; ein Tatbestand, der wiederum der oben erläuterten Plattformstrategie widerspricht. Mit der DE 40 24 035 A1 wird ferner eine Verbindung eines geräuschdämpfenden Kraftfahrzeug-Verkleidungsteiles mit dem Fahrzeugunterbau vorgeschlagen, dessen in Fahrzeuglängsrichtung gesehen vorderer oder hinterer Endabschnitt des Verkleidungsteiles eine Formschlussverbindung in Form einer Hakenverbindung aufweist, wobei die Hakenverbindungen des vorderen Endabschnittes von einem fahrzeugseitigen Stoßfängerüberzug des vorderen Stoßfängers, demgemäß von einem die Form des Fahrzeugs bestimmenden Teil formschlüssig aufgenommen sind. Bekannt sind auch schallreduzierende bodenseitige Abdeckungen von Motorräumen, die zur Befestigung weder an Antriebsaggregaten noch an Fahrzeugteilen eingerichtet sind, die die Außenform des Fahrzeugs bestimmen. So sind die Abdeckungen in den Konstruktionen nach der DE 28 01 339 A1, der DE 32 42 604 C2, der DE 33 46 421 C2 und der DE 195 34 972 A1 an seitlich verlaufenden Längsträgern des Fahrzeugs befestigt. Hier steht jedoch häufig - insbesondere bei quer eingebauten Antriebsaggretaten - wenig Platz zur Montage der Abdeckung zur Verfügung. Auch kann insbesondere bei Abdeckungen, deren Erstreckung in Längsrichtung des Fahrzeugs kürzer ist als ihre Erstreckung in Querrichtung, eine schwingungsfreie Befestigung der Abdeckung auf diese Weise Schwierigkeiten bereiten. Die gattungbildende Konstruktion DE 33 22 061 A1 sieht eine Befestigung der bodenseitigen Abdeckung sowohl seitlich an den Längsträgern des Fahrzeugs als auch mit den vorderen und hinteren Endbereichen, nämlich an einer Kühlerkonsole bzw. an einem Querträger, vor, die beide sich zwischen den Längsträgern erstrecken. Hier können zusätzliche Toleranzprobleme auftreten, da, wie beschrieben, die Abdeckung sowohl direkt an den Längsträgern als auch mit ihren Endbereichen an Teilen befestigt ist, die ihrerseits direkt mit den Längsträgern verbunden sind. An den letztgenannten Befestigungsstellen kann es zu einer Summierung von Toleranzen kommen.

Der Erfindung liegt die Aufgabe zugrunde, eine gattungsgemäße schallreduzierende Abdeckung zu schaffen, deren Befestigung am Fahrzeug unabhängig von Form und Größe des Antriebsaggregats und des äußeren Erscheinungsbilds des Fahrzeugs ist und die hinsichtlich der Montage im Fahrzeug unkritisch ist.

Die erfindungsgemäße Lösung dieser Aufgabe besteht in den kennzeichnenden Merkmalen des Patentanspruchs.

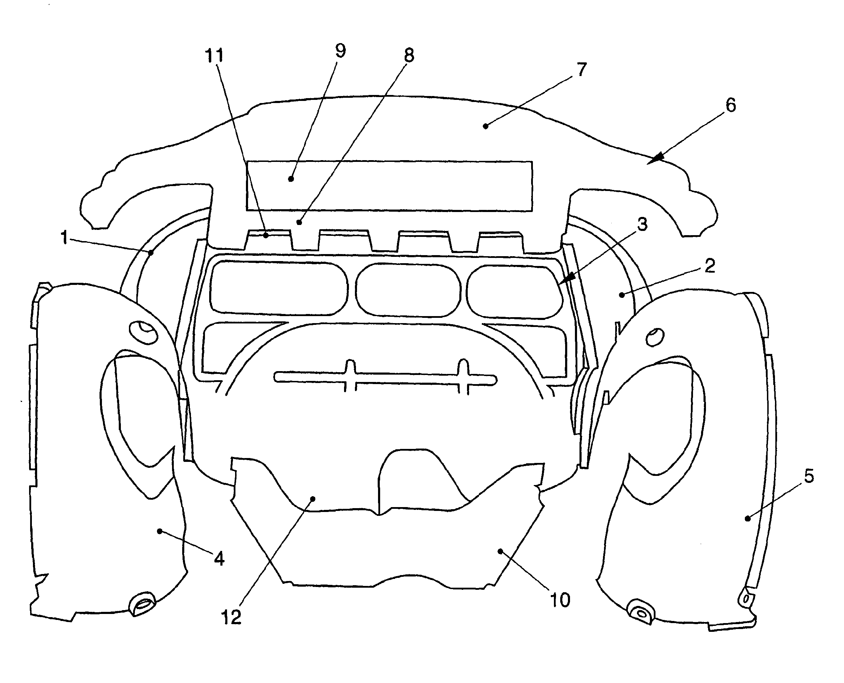

Eine Ausführungsform der Erfindung wird im folgenden anhand der Zeichnung erläutert, die eine Draufsicht auf eine bodenseitige Abdeckung im in ein Kraftfahrzeug eingebauten Zustand wiedergibt. Teile des Kraftfahrzeugs sind nur insoweit angedeutet, wie sie für das Verständnis der Erfindung eine Rolle spielen.

In diesem Ausführungsbeispiel ist ein quer eingebautes Antriebsaggregat (nicht dargestellt) angenommen. Unterhalb desselben erstreckt sich zwischen den beiden Radhausschalen 1 (linke Radhausschale) und 2 (rechte Radhausschale) die schallreduzierende bodenseitige Abdeckung 3, deren Aufbau, insbesondere Materialzusammensetzung, im einzelnen nicht interessiert, da einerseits z.B. die entsprechende Materialwahl (Sandwichkonstruktionen) bekannt ist und andererseits die Erfindung in vorteilhafter Weise diesbezüglich keine Beschränkungen auferlegt.

Vom Fahrzeug erkennt man ferner bei 4 und 5 Radhausverkleidungen sowie bei 6 eine Frontendbaugruppe, die mit dem oberen Gurt 7 seitlich zur Befestigung von Scheinwerfern eingerichtet ist, während in dem Abstand zwischen dem oberen Gurt 7 einerseits und dem Kunststoffmontageträger 8 andererseits, also bei 9, der Kühlwasser-Wärmetauscher des Antriebsaggregats untergebracht ist. Zweckmäßigerweise handelt es sich bei der Baugruppe 6 um ein Frontendmodul, das mit den verschiedenen genannten Teilen bereits vor dem Einbau in das eigentliche Fahrzeug bestückt ist.

Weiter in Richtung Fahrzeugmitte liegt der Hilfsrahmen 10, der zur Lagerung der Vorderachse des Fahrzeugs sowie der Lenkung dient und zugleich eine Momentenabstützung für das Antriebsaggregat bildet.

Erfindungsgemäß ist die bodenseitige Abdeckung 3 zur Befestigung ausschließlich an Teilen des Fahrzeugaufbaus eingerichtet, die die Form des Fahrzeugs nicht bestimmen. In diesem Ausführungsbeispiel ist der vordere Endbereich 11 der Abdeckung 3 an dem Montageträger 8 und damit an der Frontendbaugruppe 6 festgelegt, dagegen der hintere Endbereich 12 der Abdeckung 3 an dem Hilfsrahmen 10. Die Teile bzw. Bereiche 8 und 10 sind nicht fahrzeugindividuell oder motorindividuell ausgelegt, sondern plattformabhängig, d.h. für alle Fahrzeuge, bei denen ein- und dieselbe Plattform (mit verschiedenen Antriebsaggregaten) Einsatz findet. Durch die gewählte Befestigung der Abdeckung 3 wird also auch diese zu einem "Plattformteil", ist also nicht individuell an die jeweilige Fahrzeugform und an den jeweiligen Aggregattyp anzupassen.

## Patentansprüche

1. Schallreduzierende bodenseitige Abdeckung (3) für den ein Antriebsaggregat enthaltenden Motorraum eines Fahrzeugs, deren vorderer Endbereich (11) zur Befestigung an einer einen Kühlwasser-Wärmetauscher (9) tragenden Baugruppe (6) des Fahrzeugs eingerichtet ist, während ihr hinterer Endbereich (12) zur Befestigung an einem zwischen Längsträgern des Fahrzeugs verlaufenden Querträger eingerichtet ist, **dadurch gekennzeichnet, dass** die Abdeckung (3) zur Befestigung nur mit ihrem vorderen Endbereich (11), der zur Befestigung an einer Frontendbaugruppe (6) eingerichtet ist, und nur mit ihrem hinteren Endbereich (12), der zur Befestigung an einem Hilfsrahmen (10) für eine Vorderachse des Fahrzeugs eingerichtet ist, ausgelegt ist.

## Claims

1. Noise-reducing bottom-side cover (3) for the engine compartment, which contains a drive unit, of a vehicle, the front end region (11) of which cover (3) is designed to be fastened to an assembly (6), which supports a cooling water heat exchanger (9), of the vehicle, while the rear end region (12) of said cover (3) is designed to be fastened to a cross member which runs between longitudinal members of the vehicle, **characterized in that** the cover (3) is designed to be fastened only with its front end region (11), which is designed to be fastened to a front-end assembly (6), and only with its rear end region (12), which is designed to be fastened to a subframe (10) for a front axle of the vehicle.

## Revendications

1. Couvercle (3) de fond d'atténuation de bruit pour le compartiment moteur d'un véhicule automobile contenant un module d'entraînement, la zone d'extrémité (11) avant dudit compartiment étant agencée pour être fixée à un groupe modulaire (6) du véhicule supportant un échangeur thermique eau froide-chaleur (9) tandis que sa zone d'extrémité (12) arrière est agencée pour être fixée à un support transversal s'étendant entre des supports longitudinaux du véhicule, **caractérisé en ce que** le couvercle (3) est agencé pour être fixé seulement avec la zone terminale (11) avant du cache qui est agencée pour être fixée à un groupe modulaire d'extrémité avant (6), et agencé seulement avec la zone terminale (12) arrière du cache qui est agencée pour être fixée à un cadre auxiliaire (10) d'essieu avant du véhicule.
